# EUROPEAN PATENT APPLICATION

(11) **EP 2 549 097 A1**
(43) Date of publication of application: **23.01.2013**
(21) Application number: 11174627.7
(22) Date of filing: 20.07.2011
(51) Int. Cl.: F03D 7/02, F03D 1/06

(54) **Wind turbine blade with lift-regulating means**

(71) Applicant: LM Wind Power A/S, 6000 Kolding (DK)
(72) Inventor: Bæk, Peter, 6000 Kolding (DK)
(74) Representative: Kitchen, Steven Richard

(57) **Abstract**

A wind turbine blade (10) comprises an airfoil region (26) with a longitudinally extending lift-regulating means (12) allowing for a reduction of the lift in a longitudinally extending zone. The lift-regulating means (12) comprises a duct (40) extending transversely between the pressure side (36) and the suction side (38), and a closure means (42) provided on the suction side (38) and being movable between a closed position relative to the duct (40) and an open position relative to the duct (40). The position of the closure means (42) is controlled by an activating means, such as a linear actuator (54) connected to a control unit connected to a load sensor arranged on the blade.

## Description

The present invention relates generally to a wind turbine blade with lift-regulating means and more specifically to a wind turbine blade with lift-regulating means comprising an opening in a suction side of a blade through which air can be emitted to the exterior to alter the aerodynamic properties and especially to reduce the lift thereof.

Such a wind turbine blade is disclosed *inter alia* WO 2009/054714, WO 2009/025548, WO 2007/007108, WO 2008/080407 and GB 244385.

WO 2008/080407 discloses a blade with a lift-regulating means comprising a longitudinally extending outlet opening provided in the suction side of the blade and communicating with an internal cavity of the blade. An air intake to the cavity is provided at the root end of the blade. Air can be emitted to the exterior through the outlet opening by opening valve means provided at the root end of the blade, whereby the lift of the blade in a longitudinally extending zone, in which the outlet is arranged, can be reduced.

GB 244385 discloses a prime mover with an airfoil section provided with a duct extending transversely between the pressure side and the suction side of an airfoil section and with a spring-loaded hinged plate movable between a closed position in which the duct is closed and an open position in which the duct is open to allow air to flow from the pressure side to the suction side.

Long wind turbine blades provide higher power yield than short blades. It is thus desirable to provide wind turbines with long blades. Further, it would be advantageous, if the wind turbine is able to continue to operate at wind speeds where other wind turbines normally are stopped. It is also advantageous to reduce the loads on the blades at or near rated power.

In order to increase the energy production of a wind turbine a need exists for providing a wind turbine blade allowing for operation in conditions, where conventional wind turbines normally are stopped. Accordingly, a need exists for providing a wind turbine blade having an increased length while being able to operate at higher wind speeds than other wind turbine blades by reducing the load thereon.

According to the invention, this and other advantages are obtained by a wind turbine blade for a wind turbine rotor having a hub, said blade having a longitudinal direction and a length L along a longitudinal axis and having as seen in the longitudinal direction a root region, an airfoil region ending in a tip and optionally a transition region between the root region and the airfoil region, said airfoil region having a pressure side and a suction side and further a leading edge and a trailing edge, said edges defining an airfoil chord line therebetween and an edgewise direction, said airfoil region being provided with longitudinally extending lift-regulating means allowing for a reduction of the lift in a longitudinally extending zone and comprising
- at least one duct extending transversely between the pressure side and the suction side to allow air to flow from the pressure side to the suction side, said duct opening into the suction side in an outlet opening formed by a single elongated opening or a number longitudinally adjacent small openings and said duct further opening into the pressure side through an inlet opening, and
- closure means provided on or at the suction side and being movable between a closed position relative to the duct, in which substantially no air is allowed to flow between the pressure side and the suction side through the duct, and an open position relative to the duct, in which air is allowed to flow between the pressure side and the suction side through the duct,
wherein the longitudinally extending zone, in which the lift-regulating means allows for lift reduction, extends from a first point in proximity to the tip to a second point between the first point and the root region, the duct having an elongated cross section of a width W extending essentially in the edgewise direction of the blade and a length I extending essentially in longitudinal direction of the blade.

The present invention provides a blade in which the lift of the outermost portion of the blade, i.e. in the longitudinally extending zone, may be reduced by bringing the closure means of the lift-regulating means into its open position, in which air is allowed to flow between the pressure side and the suction side, thereby equalizing the pressure on the pressure side and the suction side in the area of the duct and thereby reducing the lift in this area. By reducing or eliminating the lift of the longitudinally extending zone the load or the bending moment at the hub is lowered.

Due to the possibility of reducing the lift from the blade tip and inwards wind turbines provided with one or more blades according to the invention may be operated at higher wind speeds than otherwise possible, i.e. the wind turbines may be operated at wind speeds above the so-called "cut-out wind speed" at which the wind turbine otherwise would have been stopped due to the excessive load on the blade(s). Additionally, the load on the blade may be reduced near rated power, where the blade loads are very high. By reducing or eliminating the lift of the outer portion of the blade by bringing the opening means into the open position, the inner part of the blade produces the required torque, but with a smaller bending moment on the blade than if the outer portion of the blade was providing lift.

Advantageously, by means of this option the wind turbine may be provided with longer blades than usual, the blades being relieved of load as the wind speed increases, whereby the operating range of the wind turbine as regards wind speed is increased. A significant advantage is that the bending moment to which the blade root is subjected can be reduced. The forces acting on the outermost portion of the blade adjacent the blade tip have a comparatively high impact on the bending moment at the blade root as the moment is given by distance times force.

An additional advantage of providing wind turbines with longer blades than usual is that the wind turbines may operate at lower wind speeds than usual, thus increasing the power production.

The length of the blade is preferably at least 30 m, at least 35 m, at 40 m, at least 45 m, at least 50 m, at least 55 m or at least 60 m.

The single outlet opening of the duct may have a cross section essentially corresponding to the cross section of the duct adjacent to the outlet opening.

The duct may have an essentially constant cross section from the pressure side to the suction side.

A projection of the inlet and outlet openings of the duct on the chord line plane may at least partially overlap each other as seen perpendicular to the longitudinal axis of the blade.

A projection of the inlet and outlet openings of the duct on the chord line plane may at least partially overlap each other as seen in the direction of the chord line.

The duct may extend essentially perpendicular to the chord line.

The lift-regulating means may further comprise a second closure means provided on or at pressure side and coupled to the closure means on or at the suction side so as to open and close the duct synchronously therewith.

According to an embodiment the blade comprises a number of longitudinally adjacent lift-regulating means comprising a duct and a closure means.

Thereby it is possible to sequentially reduce the lift in individual longitudinal zones from the tip and inwards and thereby sequentially lower the load at the hub. Additionally, by providing a number of longitudinally adjacent lift-regulating means the structural strength of the blade may be improved compared to using a single lift-regulating means, especially when the lift-regulating means is to extend over a substantial length of the blade.

The width W of the duct of the lift-regulating means may be at least 2%, optionally at least 5%, alternatively at least 10%, alternatively at least 15% and alternatively at least 20% of the length of the chord line.

According to a further embodiment of the invention as seen in the edgewise direction of the blade, the duct of the lift-regulating means is arranged in the leading half of the blade, alternatively in the leading third of the blade, i.e. the duct of the lift-regulating means is arranged within either 0-50% of the chord length or within 0-33% of the chord length from the leading edge of the blade.

As the pressure difference between the suction side and the pressure side of the blade is at the highest in the leading half and especially in the leading third of the blade, it is advantageous to provide the duct in these areas of the blade so as to obtain the desired lift reduction. It should, however, be noted that lift-regulating means also may be arranged in the trailing edge of the blade.

The first and second points of the longitudinally extending zone in which the lift-regulating means allows for lift reduction may be interspaced by at least 10%, alternatively at least 20%, alternatively at least 30%, alternatively at least 40% and alternatively at least 50% of the length of the blade.

By extending the length of the longitudinally extending zone it is possible to operate a wind turbine provided with a blade according to the invention far above the "cut-out wind speed" at which the turbine otherwise would have been stopped due to excessive loads. Alternatively, it is possible to provide the wind turbine with much longer blades than usual.

According to an additional embodiment, the closure means is formed by a single closure member.

The single closure member may be movable only between a closed position and an open position. Alternatively, the closure member may be gradually movable between a position, in which it closes the entire length of the duct, and an open position, in which it only closes a portion of the length of the duct.

According to another embodiment a closure means is formed by a number of closure members, each being movable between a closed position, in which they close respective longitudinal portions of the length of the duct, and an open position, in which they open respective longitudinal portions of the length of the duct.

Any of the number of closure members may be movable only between a closed position, in which they close the respective longitudinal portions of the length of the duct, and an open position in which they open the respective longitudinal portions of the length of the duct. Alternatively, any of the closure members may be gradually openable so as to gradually open respective longitudinal portions of the length of the duct.

According to a further embodiment the closure means comprises at least one closure member being adjustable to close a variable length of the duct.

As a result, by gradually opening the closure member from the first point to the second point of the longitudinal extending zone it is possible to gradually remove or reduce lift of the blade from the first point towards the second point.

In an embodiment of the invention, the closure member comprises a plate hingedly connected to the blade by means of hinge axis, preferably extending in the longitudinal direction of the blade.

According to an additional embodiment the closure member comprises a plate slidably connected to the blade.

The plate may be slidably connected to the blade in the longitudinal direction thereof, thereby allowing for a lift reduction in longitudinal portions of the length of the duct. Alternatively, the plate may be slidably connected to the blade in the edgewise direction of the blade, thereby essentially only able to provide a lift reduction over the entire length of the duct.

According to a further embodiment the closure member is flexible and adapted to be rolled up into a roll in its open position and pulled out into a closed position.

The flexible closure member may be arranged so as to be rolled up and pulled out in the longitudinal direction of the blade. As a result, a lift reduction may be provided gradually from the first point towards the second point. Alternatively, the flexible closure member may be rolled up and pulled out in the edgewise direction of the blade, thereby only reducing the lift in the corresponding portion of the length of the duct.

The closure member may be formed as a Venetian blind or a roll front and be adapted to be rolled up into a roll in its open position and pulled out in its closed position.

The flexible closure member may be formed as a roller blind and be rolled up into a roll in its open position and pulled out in its closed position.

According to another embodiment the closure member is formed of a flexible plate and connected to the blade along a line extending in the longitudinal direction of the blade.

The flexibility of the plate allows for a gradual opening thereof in relation to the duct.

In particular in relation to the above embodiment of the blade according to the invention and the embodiment of the blade according to the invention, wherein the closure member comprises a hinged plate hingedly connected to the blade by a hinge axis extending in the longitudinal direction of the blade, the opening and closing of the plate may take place passively, i.e. depending on the pressure acting on the suction side thereof and the pressure acting on the pressure side thereof. When a closure member is arranged on the pressure side of the blade and coupled to the closure member on the suction side, as explained above, the opening and closing of these closure members takes place in dependency of the pressure acting on the closure member on the suction side and the pressure acting on the closure member on the pressure side.

When the closure member comprises a plate hingedly connected to the blade by means of a hinge axis extending in the longitudinal direction, the plate is preloaded, such as spring-loaded, towards the closed position, the preloading being chosen such that the plate is brought into its open position when the pressure difference between the pressure side and the suction side at the duct exceeds a pre-determined value. A spring providing the preloading may be considered a passive activating means, as it only allows the closure member to move into its open position when the pressure difference exceeds the pre-determined value.

When the closure member is formed of a flexible plate connected to the blade along a connection line extending in the longitudinal direction of the blade, the flexibility of the plate preloads the plate towards its closed position, the preloading being chosen such that at least over a length of the duct the plate is brought into its open position when the pressure difference between the pressure side and the suction side at the duct exceeds a pre-determined value. The flexibility of the plate may be considered a passive activating means, as it only allows the plate to move into its open position when the pressure difference exceeds the pre-determined value.

In an embodiment of the invention the lift-regulating means comprises activating means for changing the position of the closure means between the closed and open positions thereof and vice versa.

As a result, the position of the closure means or closure member may be controlled accurately and actively in dependency of the loading of the blade, i.e. the closure means is an active closure means.

According to an additional embodiment the blade comprises at least one sensor, such as load sensor or flow sensor, configured to measure wind loads, eg. wind pressure, or strain in the blade, and further comprises a control system with a control unit connected to the activating means and the sensor so that the control unit may activate the activating means and thus change the position of the closure means between the closed and the open position thereof and vice versa in dependency of the measurements made by the sensor.

Such a wind turbine blade may thus be "automatically controlled" so that the lift thereof is adapted to the load thereon.

The present invention further relates to a wind turbine rotor with a blade and preferably three blades according to the invention and wherein said wind turbine rotor comprising a central control system with a control unit for instance arranged in the rotor hub and connected to at least one sensor, such as a load or flow sensor configured to measure wind loads, and the activating means of each blade to allow the control unit to activate or adjust each lift-regulating means based on the load measurement of each blade and/or the position of the closure means of the lift-regulating means.

Advantageously, this embodiment enables activation of the activating means on the basis of the load measurements from one of the other blades. As a result, for instance when the turbine is hit by a wind gust, a blade may more easily obtain optimum lift properties based on the load data received from another blade, before it is subjected to the load to which a preceding blade has just subjected. In a typical situation the blades are subjected to wind higher speeds when they are directed upwards during their rotation than when they are directed downwards. A blade may thus receive data from an upwardly directed blade and make an adjustment, before it reaches its upwardly extending position during rotation.

Further, the present invention relates to a wind turbine comprising a wind turbine blade according to the invention or a wind turbine rotor according to the invention.

Finally, the present invention relates to a method of controlling a wind turbine, wherein the wind turbine comprises a wind turbine blade according to the invention or wind turbine rotor according to the invention, wherein the second point between the first point and blade root is variable in the longitudinal direction of the blade by adjusting the activating means on the basis of measured loads or measured wind speeds.

The blade(s) may be pitch-controlled and the rotational speed thereof may be varied or substantially constant.

Finally, it should be noted that the activating means for activating the closure means may be a linear or rotational actuator in dependency of the structure and desired movement of the closure member, and may be powered electrically, hydraulically or pneumatically.

The invention is explained in detail below with reference to the drawing(s), in which
Fig. 1 is a schematic illustration of a wind turbine,
Fig. 2 is a schematic illustration of a wind turbine blade according to the invention,
Fig. 3 is a schematic cross-sectional view of a blade provided with a first embodiment of a closure means of a lift-regulating means,
Fig. 4 is a schematic cross-sectional view of a blade with a second embodiment of the closure means of a lift-regulating means,
Fig. 5 is a cross-sectional view of a blade with a third embodiment of a closure means of a lift regulating means,
Fig. 6 shows a longitudinal portion of Fig. 5 seen from above, i.e. the suction side of the blade,
Fig. 7 a schematic view of a longitudinal portion of a blade provided with a fourth embodiment of a closure means of a lift-regulating means,
Fig. 8 is a longitudinal sectional view along the line VIII-VIII in Fig. 7,
Fig. 9 shows a longitudinal sectional view along the line X-X in Fig. 10 of a portion of a blade provided with a fifth embodiment of a closure means of a lift-regulating means,
Fig. 10 shows a longitudinal portion of Fig. 9 seen from above, i.e. the suction side of the blade,
Fig. 11 is a schematic perspective view of a longitudinal portion of the blade provided with a sixth embodiment of a closure means of a lift-regulating means, and
Fig. 12 is a schematic view of a wind turbine rotor with a control system.

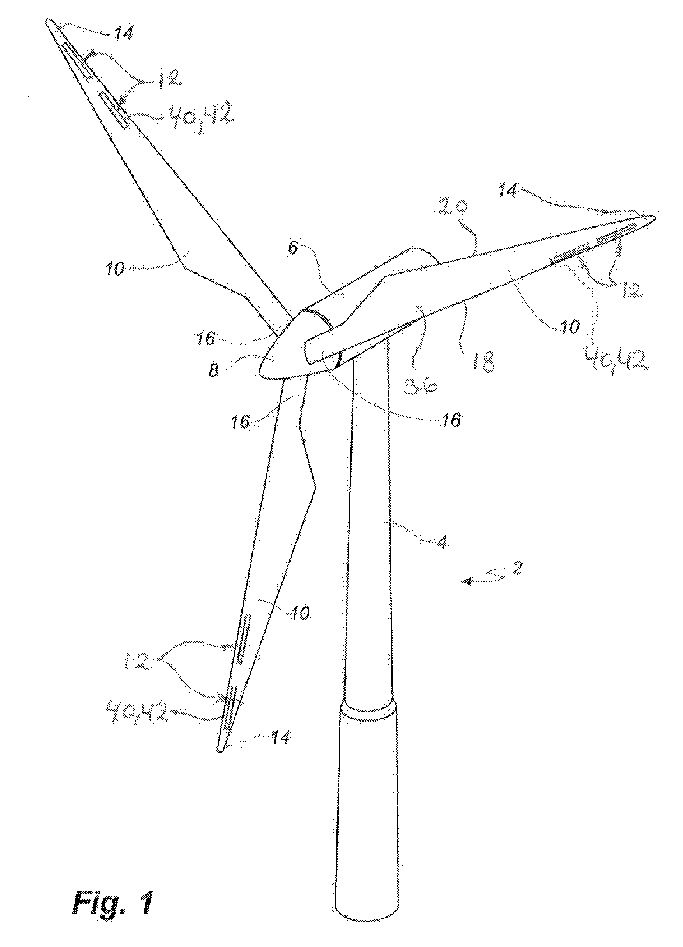

Fig. 1 is a schematic view of a conventional modern upwind wind turbine 2 according to the so-called Danish concept with a tower 4, a nacelle 6 and a rotor with substantially horizontal rotor shaft. The rotor includes a hub 8 and three wind turbine blades 10 extending essentially radially from a hub 8, each blade having a blade root 16 nearest the hub 8 and a blade 14 furthest away from the hub 8.

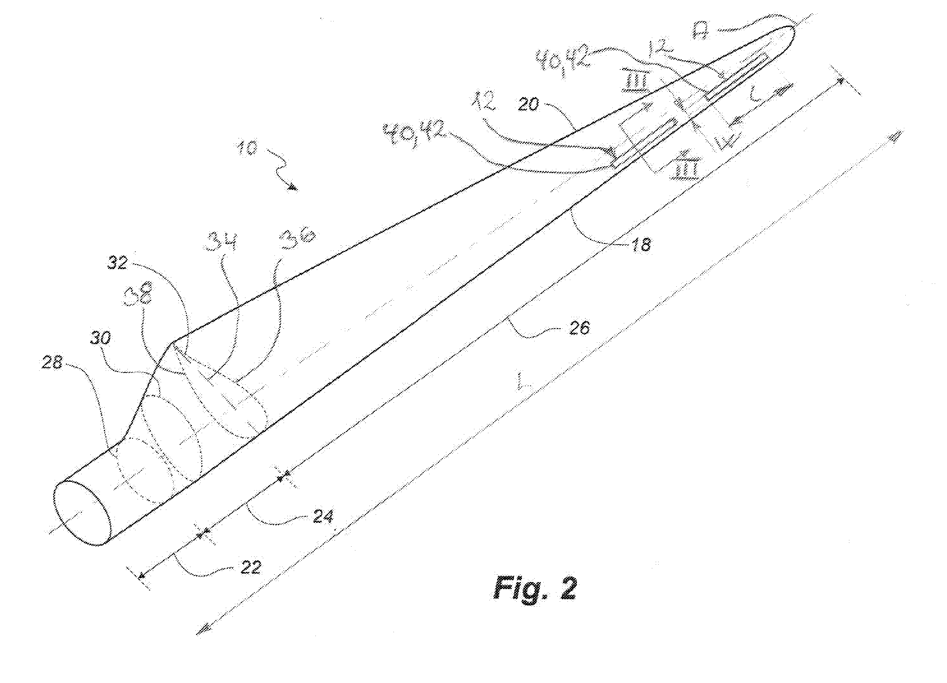

As seen in Fig. 2, the wind turbine blade 10 has the shape of a conventional wind turbine blade and comprises a root region 22 closest to the hub 8, a profile or an airfoil region 26 furthest away from the hub 8 and a transition region 24 between the root region 22 and the airfoil region 26. The wind turbine blade 10 further comprises a leading edge 18 facing the direction of rotation of the blade 10 when the turbine is mounted on the hub 8, and trailing edge 20 facing in the opposite direction of the leading edge 18.

The airfoil region 26 (also named the profile region) has an ideal or almost ideal profile contour shape with respect to generating lift, whereas the root region 22 has a substantially circular or elliptical cross section due to structural considerations. Typically, the diameter of the root region is constant along the entire root region 22. The transition region 24 has a transitional profile 30 gradually changing from the circular or elliptical shape 28 of the root region 22 to the airfoil profile 32 of the airfoil region 26. Typically, the width of the transition region 24 increases substantially linearly with increasing distance from the hub 8.

The airfoil profile 32 of the airfoil region 22 has a chord 34 extending between the leading edge 18 and the trailing edge 20. The length of the chord decreases with increasing distance from the hub 8. Further, the airfoil profile 32 has a pressure side 36 and a suction side 38 which during use normally face the windward side and the leeward side, respectively, when the rotor rotates.

Normally, the chords of different sections of the profiled contour do not lie in a common plane since the profiled contour may be twisted and/or curved, i.e. pre-bent, thus providing the chord plane with a correspondingly twisted and/or curved course. This is most often being the case so as to compensate for the local velocity of the profiled contour being dependent on the radius from the hub.

Finally, it should be noted that the blade 10 has a length L and a longitudinal axis A.

Further, the blades 10 shown in Figs. 1 and Fig. 2 are provided with longitudinally extending lift-regulating means 12 allowing for a reduction in the lift of the blade in a longitudinally extending zone.

The lift-regulating means 12 comprises a duct 40 extending transversely between the pressure side 36 and the suction side 38 to allow air flow from the pressure side 36 to the suction side 38. The lift-regulating means 12 further comprises a closure means 42 provided on or at the suction side 38 of the blade. The closure means 42 is movable between a closed position relative to the duct 40 in which substantially no air is allowed to flow between the pressure side 36 and the suction side 38 through the duct 40, and an open position relative to the duct 40 in which air is allowed to flow between the pressure side 36 and the suction side 38 through the duct 40. The duct 40 has an elongated cross section with a width W extending essentially in the edgewise direction of the blade 10 and a length I extending essentially in the longitudinal direction of the blade 10. The lift-regulating means 12 and thereby the duct 40 are arranged in the leading half of the blade as seen in the edgewise direction. In the open position of the closure means 42 in which air is allowed to flow between the pressure side 36 and the suction side 38 of the blade through the duct 40, the lift of the blade is reduced in a longitudinally extending zone corresponding to the length I of the duct 40 or more precisely the open length of the duct 40. The longitudinally extending zone extends from the first point in proximity to the tip to a second point between the first point and root region 22.

In Figs. 1 and 2 two lift-regulating means 12 are shown, said lift-regulating means 12 being arranged in line with each other.

By means of the closure means 42 at the duct 40 it is possible to lower the load on the wind turbine blade 10 when the wind speed increases by opening the closure means 42. In conditions, where the wind speed does not cause any significant load on the wind turbine blade 10, the closure means 42 is maintained in its closed position, whereby the blades produce a maximum output.

Below various embodiments of the lift-regulating means 12 are described.

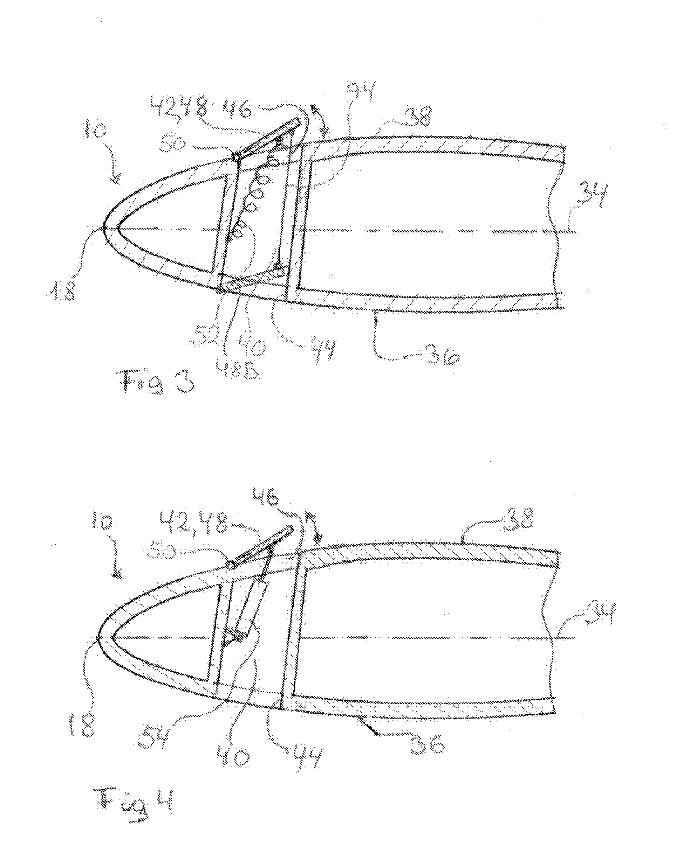

Fig. 3 is a cross-sectional view of blade 10 having a duct 40 extending between the pressure side 36 and the suction side 38. The duct 40 has an inlet opening 44, an outlet opening 46 and an essentially constant cross section from the inlet opening 44 to the outlet opening 46. Projections of the inlet and outlet openings 44, 46, respectively, of the duct 40 on the plane defined by the chords 34 essentially completely overlap each other as seen in the longitudinal direction of the blade. Further, projections of the inlet and outlet openings 44, 46, respectively, of the duct 40 on the plane defined by the chords 34 essentially completely overlap each other as seen in the direction of the chord 34. The closure means 42 is formed of single closure member in form of an elongated plate 48 hingedly connected to the blade 10 by means of a hinge axis 50 extending in the longitudinal direction of the blade 10.

The lift-regulating means 12 generally further comprises an activating means which may be a passive activating means or an active activating means. By a passive activating means is to be understood an activating means normally keeping the closure means in a closed position, but only allowing for an opening of the closure means when pressure difference between the pressure side 36 and the suction side 38 of the blade exceeds a pre-determined value. In other words, the position of the closure means 42 depends on the pressure difference between the pressure and suction side thereof. By an active activating means is to be understood an activating means allowing for changing the position of the closure means 42 independently of the pressure difference between the pressure side and the suction side of the blade.

In the embodiment shown in Fig. 3 the hinged plate 48 is kept in its normally closed position by means of a passive activating means formed of a spring 52. The spring 52 is preloaded towards its closed position, the preloading being chosen such that the plate 48 is brought into its open position when the pressure difference between the pressure side 36 and the suction side 38 at the duct 40 exceeds a predetermined value. When the plate 48 is brought into its open position due to the pressure difference, the lift generated by the blade is reduced and thereby the load on the blade is reduced.

In the embodiment shown the closure means 42 is formed of a single plate 48. It should, however, be noted that the closure means 42 may be formed of a number of plates arranged in line and the preload of the smaller plates may be chosen such that the outboard plate, i.e. the plate closest to the tip, opens prior to a more inboard plate such that the lift of the blade is gradually reduced in the direction from the tip towards the root when the wind speed increases.

Finally, in relation to Fig. 3 it should be noted that the lift-regulating means 12 may comprise a second plate 48A hinged at the pressure side and coupled to the plate 48 by means of for instance a connection bar 94 so as to open and close the duct 40 synchronously with the plate 48.

Fig. 4 shows a second embodiment according to the invention with a lift-regulating means 12 comprising a duct 40 extending between the pressure side 36 and the suction side 38 of the blade 10 and a plate 48 being hingedly connected to the suction side 38 of the blade along a hinge axis 50 extending in the longitudinal direction of the blade 10. The plate 48 is movable between an open position and a closed position relative to the outlet opening 46 of the duct 40 by means an active activating means formed of a linear actuator 54, such as a pneumatic or hydraulic cylinder/piston unit. The position of the plate 48 is controlled by means of a control system based on signals from a sensor configured to measure the wind load on the blade and/or the wind speed.

As mentioned above with reference to Fig. 3, instead of a single plate 48 the closure means 42 may be formed of a number of smaller plates arranged in line in the longitudinal direction of the blade, and each being provided with a separate active activating means.

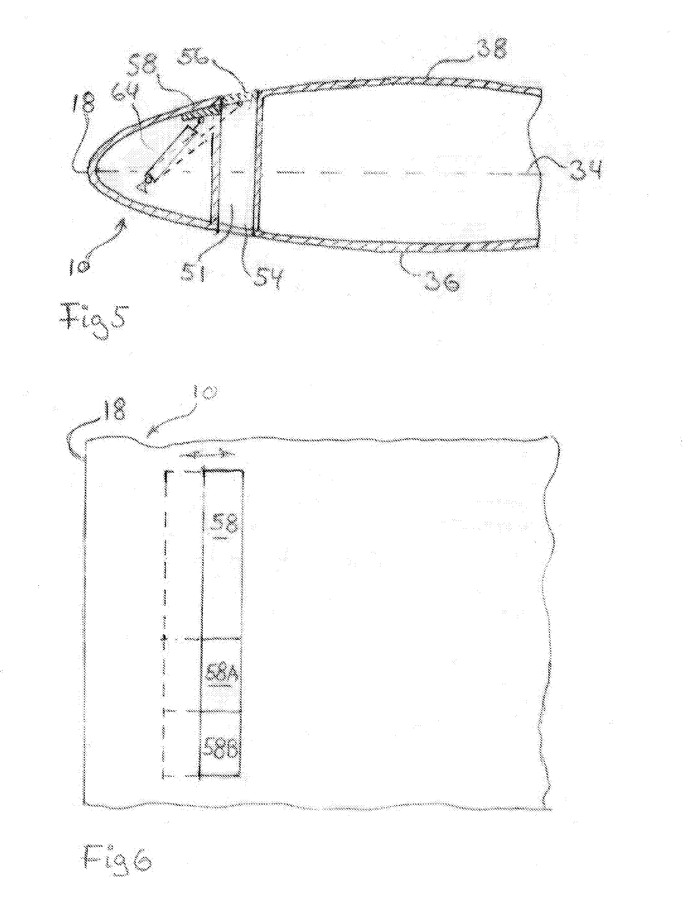

Figs. 5 and 6 disclose a third embodiment of the invention, wherein the blade 10 is provided with a duct 51 extending between the pressure side 36 and the suction side 38 of the blade 10. The duct 51 has a constant cross section between the inlet opening 54 and the outlet opening 56 thereof. A slidable plate 58 is arranged slidably in the edgewise direction of the blade between an open position and a closed position. In the open position of the plate 58 the outlet opening 56 of the duct 51 is completely open, whereas in the closed position of the slidable plate 58 the outlet opening 56 of the duct 51 is completely closed. The slidable plate 58 is movable between its open and its closed position by means of a linear actuator 64, such as a pneumatic or hydraulic cylinder/piston unit.

As indicated in Fig. 6, the closure means may be formed of a single slidable plate 58 or a number of slidable plates 58, 58A, 58B arranged in line in the longitudinal direction of the blade, thereby allowing for a sequential opening of the duct as seen from the tip towards the root of the blade. In other words, the outboard slidable plate 58, then the next plate 58A and then the most inboard plate 58B is opened as the wind speed increases in order to thereby reduce the load on the blade in dependency of the wind speed.

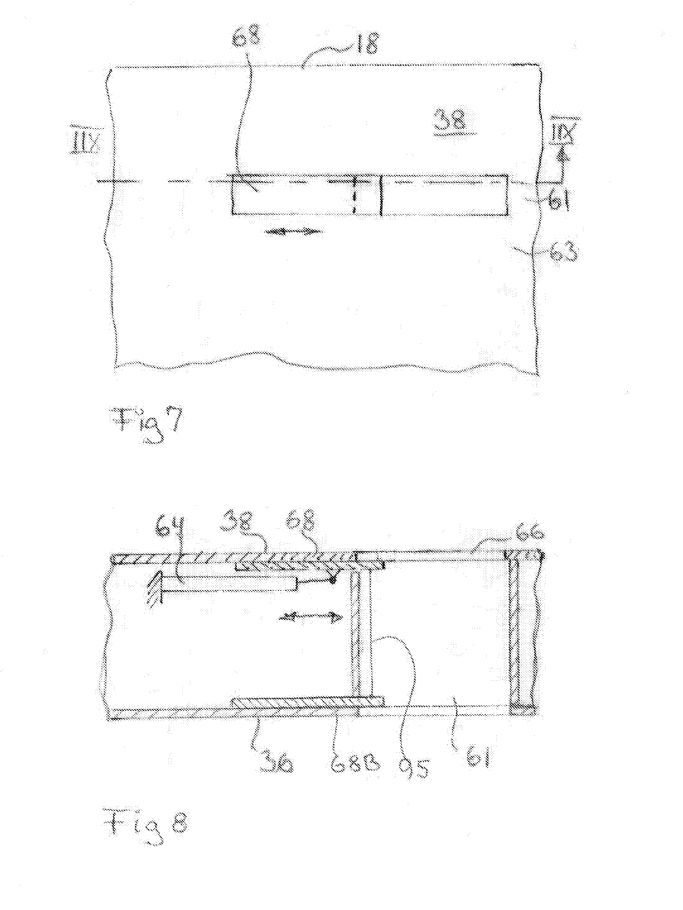

Figs. 7 and 8 disclose a fourth embodiment of a blade provided with lift-regulating means. In this embodiment lift-regulating means comprises an elongated duct 61 extending in the longitudinal direction of the blade and extending transversely through the blade from the pressure side 36 to the suction side 38 thereof. The lift-regulating means further comprises a closure member formed of a slidable plate 68 longitudinally slidable at the suction side 38 of the blade between a position in which the outlet opening 66 of the duct 61 is open and a position in which it closes the outlet opening 66 of the duct 61. The slidable plate 68 is movable between the two positions by means of an active activating means formed of a linear actuator 74, such as a pneumatic or hydraulic cylinder/piston unit. By gradually moving the slidable plate 68 from its closed to its open position, air flows from the pressure side 36 to the suction side 38 of the blade over a gradually longer portion of the blade, whereby the lift of the blade is gradually reduced. Thereby the load on the blade may be gradually reduced as the wind speed increases. Correspondingly, when the wind speed decreases the outlet opening 66 of the duct 61 may be gradually closed so as to increase the power output of the blade.

It should be noted that the lift-regulating means 12 may comprise a second slidable plate 68B arranged at the pressure side and coupled to the plate 68 by means of for instance a connection bar 95 so as to open and close the duct 61 synchronously with the plate 68.

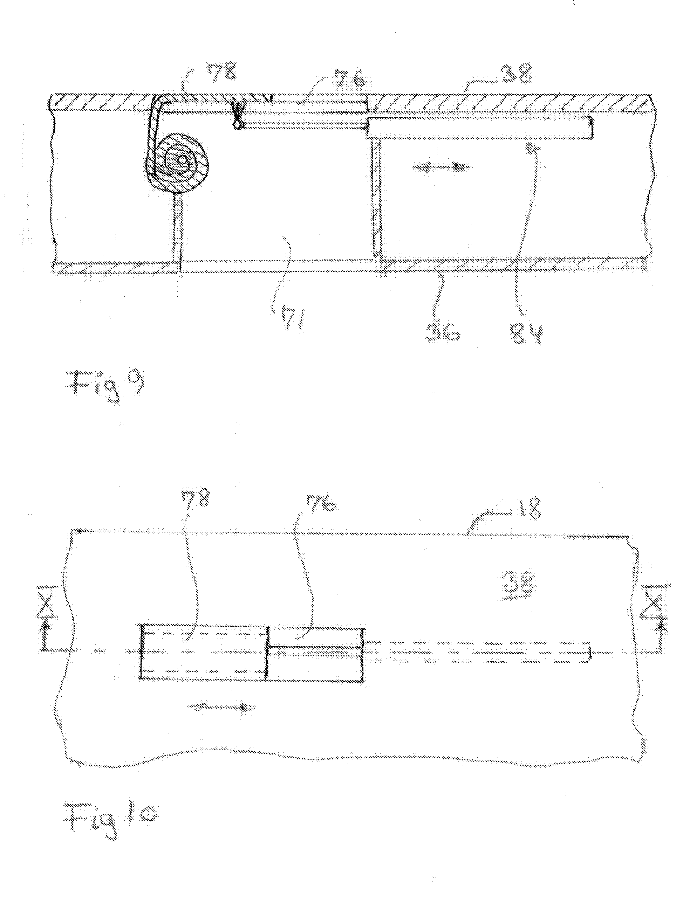

Figs. 9 and 10 disclose a fifth embodiment of a blade according to the invention provided with a longitudinally extending lift-regulating means. The lift-regulating means comprises a duct 71 extending between the pressure side 36 and the suction side 38 of the blade and a flexible closure member 78 formed so as to be rolled up into a roll and pulled out in a similar way as a roller blind or a Venetian blind. The flexible closure member 78 is arranged such that the outlet opening 76 of the duct 71 is opened when the flexible closure member is rolled up into a roll and so that the flexible member gradually closes an increasing portion of the outlet opening 76, as the flexible closure member 78 is pulled out.

The flexible closure member 78 is pulled out by means of linear actuator 84, such as a pneumatic or hydraulic cylinder/piston unit. The piston rod is connected to the flexible closure member 78 and the cylinder is connected to the blade, as shown in Figs. 9 and 10.

As explained in relation to the embodiment shown in Figs. 7 and 8, the embodiments shown in Figs. 9 and 10 also allow for a gradual opening and closure of the outlet opening 76 of the duct 71 in dependency of the wind speed so as to change the loading on the blade in dependency of the wind speed.

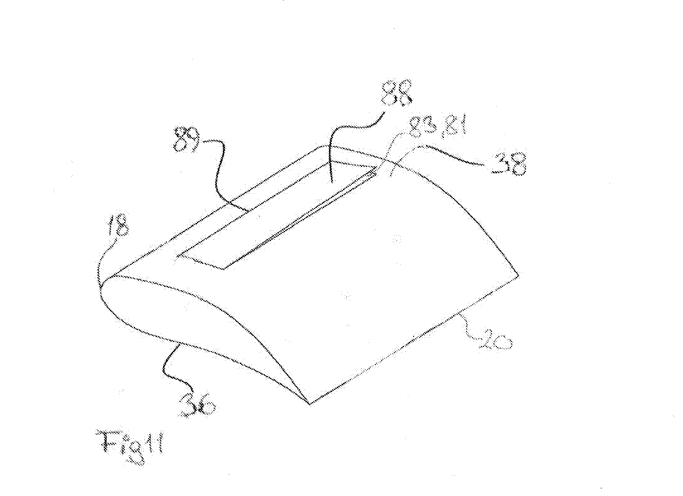

Fig. 11 discloses a sixth embodiment of a wind turbine blade comprising lift-regulating means extending in the longitudinal direction of the blade. The lift-regulating means comprises a duct 81 extending between the pressure side 36 and the suction side 38 of the blade and ending in an outlet opening 83 at the suction side 38 of the blade. The lift-regulating means further comprises a closure means formed of a flexible plate 88 connected to the suction side 38 of the blade along a longitudinally extending connection line 89 adjacent the outlet opening 86 of the duct 81. The connection line 89 forms a kind of hinge line due to the flexibility of the flexible plate 88 and further forms a passive activating means retaining the plate 88 in a closed position relative to the outlet opening 86 of the duct 81. When the pressure difference between the pressure side 36 and the suction side 38 of the plate increases and reaches a predetermined level, the flexible plate 88 moves away from its closes position and into an open position, thereby allowing air to flow from the pressure side 36 to the suction side 38 of the blade. The embodiment shown in Fig. 11 is similar to that shown in Fig. 3 in the sense that both embodiments are provided with a passive activating means, whereby the position of the closure member depends on the pressure difference between the suction side 38 and the pressure side 36 thereof. The said two embodiments may thus be considered less preferred than embodiments with an active activating means allowing for activation of the closure means independently of the pressure difference between the pressure side 36 and the suction side 38 thereof.

It should be noted that the lift-generating means in general may comprise a second closure means arranged at the pressure side of the blade and coupled to the closure means arranged at the suction side of the blade so as to open and close the duct synchronously therewith in a similar manner to that described for the closure means formed by the plates 48 and 48B in Fig. 3 and the plates 68 and 68B shown in Fig. 8

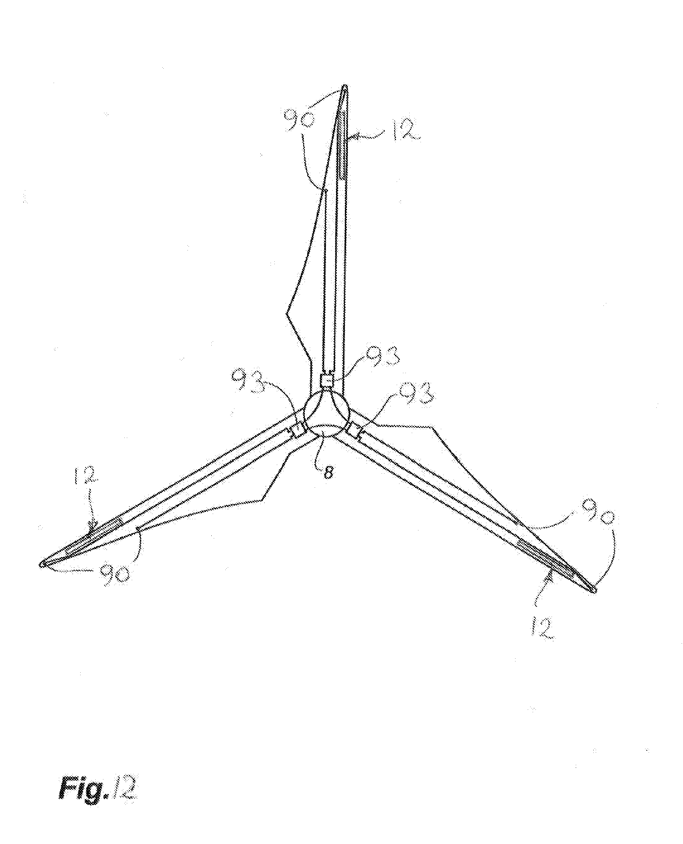

Fig. 12 is a schematic view of a rotor with a hub 8 and three wind turbine blades 10 according to the invention. Each blade is provided with a lift-regulating means 12 and two sensors 90 measuring the load on the wind turbine blades. In general, the sensors may be load sensors or flow sensors configured to measure wind loads, e.g. wind pressure, or strain gauges. Each blade is further provided with a control unit 93 connected to the activating means of the lift-regulating means 12 and the sensors 90 so that the control units 93 may activate the activating means and thus change the position of the closure means between the closed and the opened position thereof and vice versa in dependency of measurements made by the sensors 90. The control units 93 may be connected to a central control system which may be placed in one of the blades, in the hub, in the nacelle of the wind turbine, in the turbine tower or outside the turbine. The embodiment shown in Fig. 12 allows for an "automatic control" of the blade so that the lift thereof is adapted to the load thereon. The embodiment advantageously allows for activation of the activating means on the basis of the load measurements from one of the other blades. Accordingly for instance when the wind turbine is hit by a wind gust, a blade may more easily obtain optimum lift properties based on the load data received another blade, before it is subjected to loads to which the preceding blade just has been subjected. Typically, the blades are subjected to higher wind speeds when they direct upwards during their rotation than when they direct downwards. A blade may thus receive signals from an upwardly directed blade and make an adjustment before it reaches its upwardly extending position during rotation. As a result, it is possible to adapt the load on the blades so that they are not loaded so heavily.

### List of reference numerals

- 2: Wind turbine
- 4: Tower
- 6: Nacelle
- 8: Hub
- 10: Blades
- 12: Lift-regulating means
- 14: Tip
- 16: Root
- 18: Leading edge
- 20: Trailing edge
- 22: Root region
- 24: Transition region
- 26: Airfoil region
- 28: Circular or elliptical shape
- 30: Transition profile
- 32: Airfoil profile
- 34: Chord
- 36: Pressure side
- 38: Suction side
- 40: Duct
- 42: Closure means
- 44: Inlet opening
- 46: Outlet opening
- 48: Plate
- 48B: Second plate
- 50: Hinge axis
- 51: Duct
- 52: Spring
- 53: Inlet opening
- 54: Linear actuator
- 56: Outlet opening
- 58: Slidable plate
- 58A: Slidable plate
- 58B: Slidable plate
- 61: Duct
- 63: Inlet opening
- 64: Linear actuator
- 66: Outlet opening
- 68: Slidable plate
- 68B: Second slidable plate
- 71: Duct
- 73: Inlet opening
- 74: Linear actuator
- 76: Outlet opening
- 78: Flexible closure member
- 81: Duct
- 83: Inlet opening
- 84: Linear actuator
- 88: Flexible plate
- 89: Longitudinal connection line
- 90: Sensors
- 93: Control unit
- 94: Connection bar
- 95: Connection bar
- A: Longitudinal axis
- L: Length of the blade
- W: Width of the duct
- I: Length of the duct

## Claims

1. A wind turbine blade (10) for a wind turbine rotor having a hub (8),
said blade having a longitudinal direction and a length L along a longitudinal axis A and having as seen in the longitudinal direction a root region (22), an airfoil region (26) ending in a tip (14) and optionally a transition region (24) between the root region (22) and the airfoil region (26),
said airfoil region (26) having a pressure side (36) and a suction side (38) and further a leading edge (18) and a trailing edge (20), said edges defining an airfoil chord line (34) therebetween and an edgewise direction,
said airfoil region (26) being provided with longitudinally extending lift-regulating means (12) allowing for a reduction of the lift in a longitudinally extending zone and comprising
- at least one duct extending transversely between the pressure side (36) and the suction side (38) to allow air to flow from the pressure side (36) to the suction side (38), said duct opening into the suction side (38) in an outlet opening formed by a single elongated opening or a number longitudinally adjacent small openings and said duct further opening into the pressure side (36) through an inlet opening,
- closure means (42) provided on or at the suction side (38) and being movable between a closed position relative to the duct (40), in which substantially no air is allowed to flow between the pressure side (36) and the suction side (38) through the duct (40), and an open position relative to the duct, in which air is allowed to flow between the pressure side (36) and the suction side (38) through the duct (40),
wherein the longitudinally extending zone, in which the lift-regulating means allows for lift reduction, extends from a first point in proximity to the tip to a second point between the first point and the root region, the duct having an elongated cross section of a width W extending essentially in the edgewise direction of the blade and a length I extending essentially in longitudinal direction of the blade.

2. Wind turbine blade according to claim 1, wherein the blade comprises a number of longitudinally adjacent lift-regulating means (12) comprising a duct (40) and a closure means (42).

3. Wind turbine blade according to claim 1 and/or 2, wherein seen in the edgewise direction the duct (40) of the lift-regulating means (12) is arranged in the leading half of the blade, alternatively in the leading third of the blade.

4. Wind turbine blade according to any of the preceding claims, wherein the closure means is formed by a single closure member.

5. Wind turbine blade according to any of the preceding claims 1-3, wherein the closure means is formed by a number of closure members (40; 58, 58A, 58B), each being movable between a closed position, in which they close respective longitudinal portions of the length of the duct, and an open position, in which they open respective longitudinal portions of the length of the duct.

6. Wind turbine blade according to any of the preceding claims, wherein the closure means comprises at least one closure member (68, 78) being adjustable to close a variable length of the duct.

7. Wind turbine blade according to any of the preceding claims 4-6, wherein the closure member comprises a plate (48) hingedly connected to the blade by means of hinge axis (50), preferably extending in the longitudinal direction of the blade.

8. Wind turbine blade according to any of the preceding claims 4-6, wherein the closure member comprises a plate (58, 68) slidably connected to the blade.

9. Wind turbine blade according to any of the preceding claims 4-6, wherein the closure member (78) is flexible and adapted to be rolled up into a roll in its open position and pulled out into a closed position.

10. Wind turbine blade according to any of the preceding claims 4-6, wherein the closure member is formed of a flexible plate (88) and connected to the blade along a line (89) extending in the longitudinal direction of the blade.

11. Wind turbine blade according to any of the preceding claims, wherein the lift-regulating means comprises activating means (54, 64, 74, 84) for changing the position of the closure means between the closed and open positions thereof and vice versa.

12. Wind turbine blade according to claim 11, wherein the blade comprises at least one sensor (90), such as load sensor or flow sensor, configured to measure wind loads, eg. wind pressure, or strain in the blade, and further comprises a control system with a control unit connected to the activating means and the sensor (90) so that the control unit (93) may activate the activating means and thus change the position of the closure means between the closed and the open position thereof and vice versa in dependency of the measurements made by the sensor (90).

13. Wind turbine rotor with a blade and preferably three blades according to claim 11, said wind turbine rotor comprising a central control system with a control unit (93) for instance arranged in the rotor hub and connected to at least one sensor (90), such as a load or flow sensor configured to measure wind loads, and the activating means of each blade to allow the control unit to activate or adjust each lift-regulating means (12) based on the load measurement of each blade and/or the position of the closure means of the lift-regulating means (12).

14. Wind turbine comprising a wind turbine blade according to any of the claims 1-12 or a wind turbine rotor according to claim 13.

15. A method of controlling a wind turbine according to claim 14, wherein the second point between the first point and blade root is variable in the longitudinal direction of the blade by adjusting the activating means on the basis of measured loads or measured wind speeds.
